# EUROPEAN PATENT APPLICATION

(11) **EP 4 727 058 A1**
(43) Date of publication of application: **15.04.2026**
(21) Application number: 24819270.0
(22) Date of filing: 31.05.2024
(51) Int. Cl.: H04L 9/32, G06Q 50/18

(54) **PROGRAM, INFORMATION PROCESSING METHOD, AND INFORMATION PROCESSING DEVICE**

(30) Priority: 09.06.2023 JP 2023095469
(71) Applicant: Sony Group Corporation, Tokyo 108-0075 (JP)
(72) Inventor: JELJELI, Hamza, Tokyo 108-0075 (JP)
(74) Representative: MFG Patentanwälte Meyer-Wildhagen Meggle-Freund Gerhard PartG mbB
(86) International application number: PCT/JP2024/020060
(87) International publication number: WO 2024/253040

(57) **Abstract**

To manage information regarding a beneficiary of a consideration for rights on a blockchain.

A program for causing a computer to function as: an issuance information generation unit that generates information for issuing a divisible token that includes information regarding a benefit ratio of a consideration and operates on a blockchain; and a division information generation unit that generates information for issuing the token divided on the basis of distribution information of the consideration based on an agreement to a beneficiary of the consideration.

## Description

### TECHNICAL FIELD

The present disclosure relates to a program, an information processing method, and an information processing device.

### BACKGROUND ART

In recent years, management of various right relationships using a blockchain that is a distributed transaction ledger has been studied. For example, Patent Document 1 below discloses a technology for transmitting information indicating a participant participating in a post-processing operation and information indicating a content of the post-processing operation on a blockchain and recording the information in the post-processing operation such as copyright transaction or right assertion.

### CITATION LIST

### PATENT DOCUMENT

Patent Document 1: Japanese Translation of PCT International Application Publication No. 2021-500811

### SUMMARY OF THE INVENTION

### PROBLEMS TO BE SOLVED BY THE INVENTION

However, in some rights, there is a right in which an attribution of the right is different from a beneficiary of a consideration for the right. In the technology disclosed in Patent Document 1 described above, it is difficult to manage information regarding a beneficiary of a consideration for the right on a blockchain.

Therefore, it has been required to manage, on the blockchain, information regarding the beneficiary of the consideration for the right.

### SOLUTIONS TO PROBLEMS

According to the present disclosure, there is provided a program for causing a computer to function as: an issuance information generation unit that generates information for issuing a divisible token that includes information regarding a benefit ratio of a consideration and operates on a blockchain; and a division information generation unit that generates information for issuing the token divided on the basis of distribution information of the consideration based on an agreement to a beneficiary of the consideration.

Furthermore, according to the present disclosure, there is provided an information processing method executed by a computer, the method including: generating information for issuing a divisible token that includes information regarding a benefit ratio of a consideration and operates on a blockchain; and generating information for issuing the token divided on the basis of distribution information of the consideration based on an agreement to a beneficiary of the consideration.

Further, according to the present disclosure, there is provided an information processing device including: an issuance information generation unit that generates information for issuing a divisible token that includes information regarding a benefit ratio of a consideration and operates on a blockchain; and a division information generation unit that generates information for issuing the token divided on the basis of distribution information of the consideration based on an agreement to a beneficiary of the consideration.

### BRIEF DESCRIPTION OF DRAWINGS

Fig. 1 is a schematic diagram illustrating an overall configuration of an information processing system that implements a technology according to the present disclosure.
Fig. 2 is a block diagram for describing a configuration related to issuance of a token in an information processing system according to a first embodiment.
Fig. 3 is a block diagram for describing a configuration related to division of a token in the information processing system according to the first embodiment.
Fig. 4 is an explanatory diagram illustrating an example of further distributing a token from a creator and a publisher to a management organization.
Fig. 5 is an explanatory diagram illustrating token division and integration by the distribution illustrated in Fig. 4.
Fig. 6 is a block diagram for describing a configuration related to information disclosure of a token in the information processing system according to the first embodiment.
Fig. 7 is a block diagram for describing a configuration related to issuance of consideration information in the information processing system according to the first embodiment.
Fig. 8 is a sequence diagram for describing a flow of operation of the information processing system according to the first embodiment.
Fig. 9 is a sequence diagram for describing a flow of operation of the information processing system according to the first embodiment.
Fig. 10 is a block diagram for describing a configuration related to issuance of a token in an information processing system according to a second embodiment.
Fig. 11 is a block diagram for describing a configuration related to division of a token in the information processing system according to the second embodiment.
Fig. 12 is an explanatory diagram illustrating an example of further dividing and integrating a token from a creator and a publisher.
Fig. 13 is a block diagram for describing a configuration related to issuance of consideration information in the information processing system according to the second embodiment.
Fig. 14 is a block diagram illustrating a hardware configuration example of an information processing device.

### MODE FOR CARRYING OUT THE INVENTION

Preferred embodiments of the present disclosure will be described below in detail with reference to the accompanying drawings. Note that in the present specification and drawings, configuration elements having substantially the same functional configuration are denoted by the same reference signs, and repetitive explanations will be omitted.

Note that the description will be given in the following order.
1. Overall configuration
2. First embodiment
   2.1. Configuration related to token issuance
   2.2. Configuration related to token division
   2.3. Configuration related to information disclosure
   2.4. Configuration related to issuance of consideration information
   2.5. Operation of information processing system
3. Second embodiment
   3.1. Configuration related to token issuance
   3.2. Configuration related to token division
   3.3. Configuration related to issuance of consideration information
4. Hardware configuration

### <1. Overall Configuration>

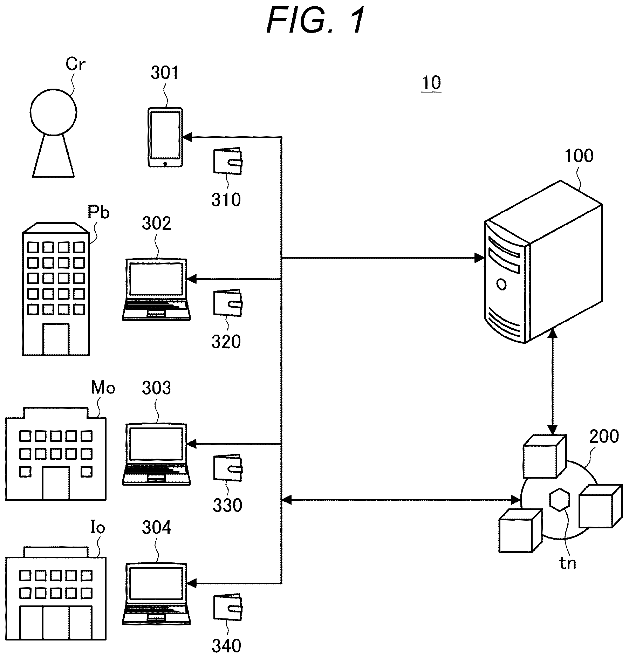

First, an overall configuration of an information processing system that implements the technology according to the present disclosure will be described with reference to Fig. 1. Fig. 1 is a schematic diagram illustrating an overall configuration of an information processing system 10.

As illustrated in Fig. 1, the information processing system 10 includes information processing terminals 301, 302, 303, and 304, an information processing device 100, and a blockchain 200. The information processing system 10 is a system that manages distribution of a consideration generated from a creation created by a creator Cr using a token tn operating on the blockchain 200.

For example, the creation created by the creator Cr is widely published to a public by a publisher Pb, and is used in various forms. Furthermore, the management of use of the creation and collection of the consideration are executed by a management organization Mo to which the management is delegated. Therefore, the publisher Pb and the management organization Mo can be beneficiaries who receive the consideration generated from the creation by an agreement with the creator Cr.

In the information processing system 10, a divisible token tn indicating a benefit ratio of the consideration based on the agreement can be issued on the blockchain 200, and the issued token tn can be divided and allocated to the beneficiaries such as the publisher Pb and the management organization Mo. With this arrangement, the information processing system 10 can manage the benefit ratio based on the agreement of the consideration generated from the creation on the blockchain 200 that is difficult to tamper with.

The blockchain 200 is a distributed ledger managed by a peer-to-peer network. In the blockchain 200, the divisible token tn indicating the benefit ratio of the consideration generated from the creation is issued. When the consideration is distributed on the basis of the agreement, the information processing system 10 divides the token tn and issues the token tn to the beneficiaries of the consideration, such that a ratio of the consideration received by each of the beneficiaries can be recorded on the blockchain 200 using the token tn. The token tn may be, for example, a so-called semi-fungible token (SFT). More specifically, the divisible token may be the SFT defined in the ERC3525.

The information processing device 100 generates information for controlling the token tn on the blockchain 200. Specifically, the information processing device 100 may generate information for issuing, dividing, updating, or the like the token tn on the blockchain 200 on the basis of an input from the information processing terminals 301, 302, 303, and 304. A transaction including the information generated by the information processing device 100 can control the token tn by being transmitted onto the blockchain 200 via wallets 310, 320, 330, and 340 included in each of the information processing terminals 301, 302, 303, and 304.

Furthermore, the information processing device 100 may generate information for dividing or updating the token tn. The information regarding distribution of the consideration is sensitive information that is difficult to disclose. Therefore, the information processing device 100 may generate the information for dividing or updating the token tn by performing processing to prevent the information regarding the distribution of the consideration from being published. According to this, the information processing device 100 can record the information regarding the distribution of the consideration based on the agreement on the blockchain 200 while maintaining high confidentiality.

Further, the information processing device 100 may generate information proving that a process of generating the information for dividing or updating the token tn has been legitimately executed. The generated information can be verified on the blockchain 200 to prove that the process has been legitimately executed. Note that the process being legitimately executed means that the content of the process has been executed as determined without being tampered with or the like. According to this, the information processing device 100 can process sensitive information such as distribution of the consideration based on the agreement more safely.

The information processing terminals 301, 302, 303, and 304 are terminals operated by users of the information processing system 10. The information processing terminals 301, 302, 303, and 304 may be, for example, a smartphone, a tablet terminal, a personal computer, or the like.

For example, the information processing terminal 301 is a terminal that is operated by the creator Cr who has created a creation that is a generation source of a consideration whose benefit ratio is indicated using the token tn and manages the wallet 310 of the creator Cr. The information processing terminal 302 is a terminal that is operated by the publisher Pb who widely publishes the creation created by the creator Cr to the public and manages the wallet 320 of the publisher Pb. The information processing terminal 303 is a terminal that is operated by the management organization Mo that collects and manages the consideration for use or the like of the creation created by the creator Cr, and manages the wallet 330 of the management organization Mo. The information processing terminal 304 is operated by an issuing organization Io that authenticates issuance of the token tn on the blockchain 200, and is a terminal that manages the wallet 340 of the issuing organization Io.

The information processing terminals 301, 302, 303, and 304 can transmit a transaction from each of the wallets 310, 320, 330, and 340 to the blockchain 200 in cooperation with the information processing device 100. With this arrangement, on the blockchain 200, the issuance of the token tn, the division of the token tn according to the benefit ratio of the consideration, and the update of the token tn as the division source are executed by a smart contract based on the transmitted transaction.

In the information processing system 10, the benefit ratio of the consideration can be managed by using the token tn operating on the highly tamper-resistant blockchain 200. Furthermore, the information processing system 10 can protect the privacy of each beneficiary by performing processing such that the information regarding the benefit ratio of the consideration included in the token tn is not published. Further, the information processing system 10 verifies that the process of generating the information for managing the token tn has been legitimately executed, such that it is possible to more safely execute the processing regarding the benefit ratio of the consideration.

### <2. First Embodiment>

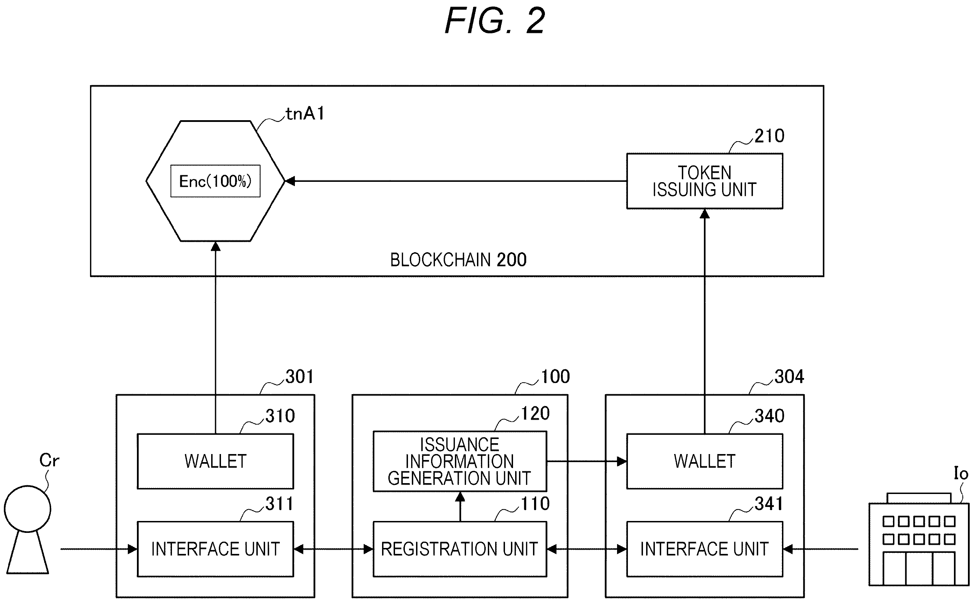

A functional configuration of the information processing system 10 according to a first embodiment of the present disclosure will be described with reference to Figs. 2 to 7. Hereinafter, configurations related to each of issuance of the token tn, division of the token tn, information disclosure of the token tn, and issuance of consideration information will be separately described. Note that in the following, each of the issued tokens is expressed as a token tn in a case of not being distinguished, and each of the tokens is expressed as tokens tnA1 to tnC3 in a case of being distinguished. The information processing system 10 according to the first embodiment encrypts the information regarding the benefit ratio of the consideration such that only a beneficiary can decrypt the information, and manages the information on the blockchain 200.

### (2.1. Configuration Related to Token Issuance)

Fig. 2 is a block diagram for describing a configuration related to issuance of a token tnA1 in the information processing system 10. The information processing system 10 can issue the token tnA1 indicating a benefit ratio of a consideration generated from a creation to the creator Cr on the basis of registration of the creation from the creator Cr.

As illustrated in Fig. 2, the information processing device 100 includes a registration unit 110 and an issuance information generation unit 120. The information processing terminal 301 operated by the creator Cr includes the wallet 310 and an interface unit 311. The information processing terminal 304 operated by the issuing organization Io includes the wallet 340 and an interface unit 341.

### (Information Processing Terminal 301)

The wallet 310 stores a secret key of the creator Cr used for an electronic signature or the like, and generates a transaction to be transmitted to the blockchain 200. The creator Cr can decrypt information included in the token tnA1, which has been encrypted with its own public key, by using the secret key stored in the wallet 310.

The interface unit 311 is an input/output interface of the information processing terminal 301. The creator Cr can apply for the registration of the creation and request the issuing organization Io to issue the token tnA1 via the interface unit 311. For example, the interface unit 311 may include, as an input unit, a mechanism that accepts an input from the creator Cr such as a mouse, a keyboard, a touch panel, a button, a switch, a lever, or a microphone. Furthermore, the interface unit 311 may include, as an output unit, a display device such as a liquid crystal display (LCD), a plasma display panel (PDP), an organic light emitting diode (OLED) display, a hologram, or a projector, or may include a sound output device such as a speaker or a headphone.

### (Information Processing Terminal 304)

The wallet 340 stores a secret key of the issuing organization Io used for an electronic signature or the like, and generates a transaction to be transmitted to the blockchain 200. For example, the wallet 340 can generate a transaction for issuing the token tnA1 to the creator Cr who has registered the creation.

The interface unit 341 is an input/output interface of the information processing terminal 304. The issuing organization Io can verify the creation for which the registration has been applied for and give an instruction to issue the token tnA1 via the interface unit 341. For example, the interface unit 341 may include, as an input unit, a mechanism that accepts an input from the issuing organization Io such as a mouse, a keyboard, a touch panel, a button, a switch, a lever, or a microphone. Furthermore, the interface unit 341 may include, as an output unit, a display device such as a liquid crystal display (LCD), a plasma display panel (PDP), an organic light emitting diode (OLED) display, a hologram, or a projector, or may include a sound output device such as a speaker or a headphone.

### (Information Processing Device 100)

The registration unit 110 registers a creation created by the creator Cr. Specifically, the registration unit 110 requests the issuing organization Io to verify the received creation by receiving the creation registration application from the creator Cr. The issuing organization Io verifies legitimacy and validity of the creation for which the registration has been applied for. In a case where the registration of the creation is permitted, the issuing organization Io instructs the information processing device 100 to issue the token tnA1 corresponding to the creation.

The issuance information generation unit 120 generates information for issuing the token tnA1 to the creator Cr of the registered creation. Specifically, the issuance information generation unit 120 first encrypts information indicating a benefit ratio (for example, 100%) of a consideration generated from the creation with the public key of the creator Cr, and generates information for requesting an issuance transaction of the token tnA1. Next, the issuance information generation unit 120 transmits the encrypted information indicating the benefit ratio to the wallet 340 of the issuing organization Io, and requests the wallet 340 of the issuing organization Io to transmit the issuance transaction of the token tnA1. With this arrangement, the wallet 340 can transmit the issuance transaction of the token tnA1 including the encrypted information indicating the benefit ratio to a token issuing unit 210 on the blockchain 200.

The token issuing unit 210 is a program implemented by the smart contract on the blockchain 200. The token issuing unit 210 issues the token tnA1 including encrypted information indicating the benefit ratio to the wallet 310 of the creator Cr according to the transmitted transaction. The issued token tnA1 is a divisible semi-fungible token (SFT) .

According to the above configuration, the information processing system 10 can issue the token tnA1 including the information indicating the benefit ratio of the consideration for the creation to the creator Cr who has registered the creation. The creator Cr accesses the token tnA1 issued to the creator Cr via the wallet 310, and at the same time, can decrypt information "Enc (100%)" indicating the benefit ratio included in the token tnA1 with the secret key stored in the wallet 310 and confirm it.

### (2.2. Configuration Related to Token Division)

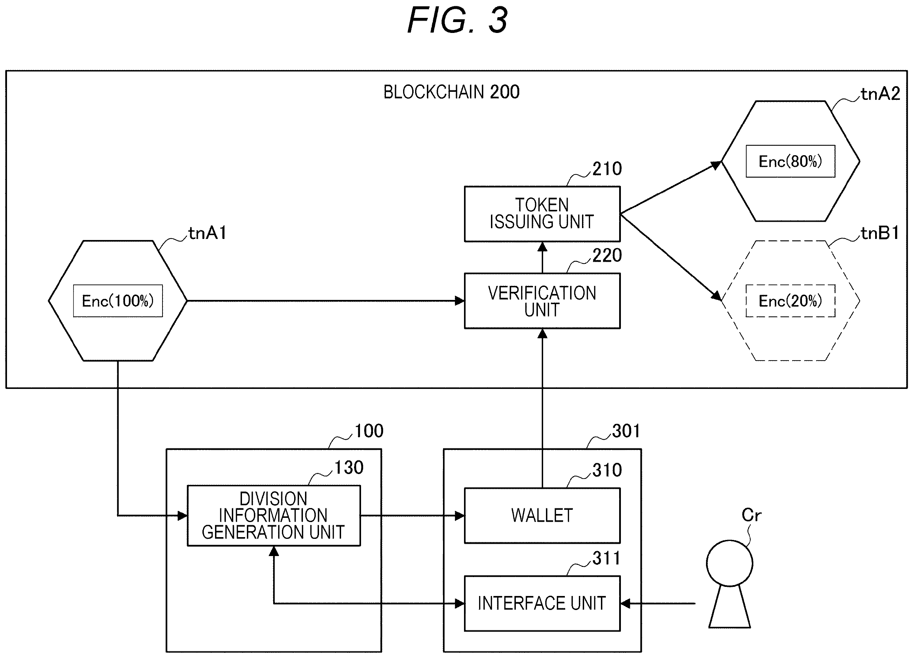

Fig. 3 is a block diagram for describing a configuration related to division of the token tnA1 in the information processing system 10. The information processing system 10 can issue a token tnB1 generated by the division of the token tnA1 to the publisher Pb on the basis of the instruction from the creator Cr. Furthermore, the information processing system 10 can update the token tnA1 after dividing the token tnB1 to a token tnA2.

For example, in a case where the creator Cr permits the publisher Pb to publish the creation to the public, the publisher Pb may have a right to receive the consideration generated from the creation on the basis of the agreement. The information processing system 10 divides the token tnA1 indicating the benefit ratio of the consideration and issues the token tnB1 indicating a part of the benefit ratio of the consideration to the publisher Pb, such that it is possible to record that the publisher Pb is the beneficiary of the consideration on the blockchain 200.

As illustrated in Fig. 3, the information processing device 100 includes a division information generation unit 130. The information processing terminal 301 operated by the creator Cr includes the wallet 310 and the interface unit 311.

### (Information Processing Terminal 301)

The wallet 310 stores the secret key of the creator Cr used for an electronic signature or the like, and generates a transaction to be transmitted to the blockchain 200. The creator Cr can decrypt the information included in the token tnA1, which has been encrypted with its own public key, by using the secret key stored in the wallet 310.

The interface unit 311 is an input/output interface of the information processing terminal 301. The creator Cr can instruct, via the interface unit 311, to issue the token tnB1 generated by the division of the token tnA1 to the publisher Pb.

### (Information Processing Device 100)

The division information generation unit 130 divides the token tnA1 and generates information for issuing the token tnB1 generated by the division of the token tnA1 to the publisher Pb.

Specifically, in a case where an instruction to move a part (for example, 20%) of the benefit ratio (100%) owned by the creator Cr to the publisher Pb is input, the division information generation unit 130 first acquires information "Enc (100%)" indicating the benefit ratio from the token tnA1. Next, the division information generation unit 130 decrypts the acquired information indicating the benefit ratio with the secret key of the creator Cr. Note that the division information generation unit 130 may acquire the secret key of the creator Cr in cooperation with the wallet 310, or may decrypt the information indicating the benefit ratio using the wallet 310 having the secret key of the creator Cr.

Subsequently, the division information generation unit 130 divides information indicating a benefit ratio by an instructed allocation (for example, 20%:80%), thereby generating information indicating a benefit ratio (for example, 20%) of the publisher Pb and information indicating a benefit ratio (for example, 80%) of the creator Cr. Further, the division information generation unit 130 encrypts the information indicating the benefit ratio of the publisher Pb with the public key of the publisher Pb, and encrypts the information indicating the benefit ratio of the creator Cr with the public key of the creator Cr. Thereafter, the division information generation unit 130 generates proof information for proving that the above process has been legitimately executed.

Subsequently, the division information generation unit 130 transmits the encrypted information indicating the benefit ratio of the publisher Pb, the encrypted information indicating the benefit ratio of the creator Cr, and the proof information for proving that the process has been legitimately executed to the wallet 310 of the creator Cr. Furthermore, the division information generation unit 130 requests the wallet 310 to transmit an issuance transaction of the token tnB1. With this arrangement, the wallet 310 can transmit the issuance transaction of the token tnB1 including the proof information and the encrypted information indicating the respective benefit ratios to a verification unit 220 on the blockchain 200.

The verification unit 220 is a program implemented by the smart contract on the blockchain 200. The verification unit 220 verifies that the process of the division information generation unit 130 has been legitimately executed by using the proof information included in the transmitted transaction and the information "Enc (100%)" indicating the benefit ratio acquired from the token tnA1.

For example, the verification unit 220 may verify that the process of the division information generation unit 130 has been legitimately executed by zero knowledge proof (ZKP). The zero knowledge proof is a method by which a certifier (prover) proves to a verifier (verifier) that "his/her claim is true", without disclosing other information. According to this method, the verification unit 220 can verify the legitimacy of the process executed by the division information generation unit 130 without knowing the content of the process executed by the division information generation unit 130.

In a case where the legitimacy of the process is verified by the verification unit 220, the transaction transmitted on the blockchain 200 is further output to the token issuing unit 210.

The token issuing unit 210 is a program implemented by the smart contract on the blockchain 200. The token issuing unit 210 issues the token tnA2 and the token tnB1 by dividing the token tnA1 according to the transmitted transaction. Since the token tnA1 is a divisible semi-fungible token (SFT), the token tnA1 can be divided into the token tnA2 and the token tnB1.

Specifically, the token issuing unit 210 issues the token tnB1 obtained by dividing the token tnA1 to the wallet 320 of the publisher Pb according to the information indicating the benefit ratio of the publisher Pb included in the transaction. Furthermore, the token issuing unit 210 updates the token tnA1 issued to the wallet 310 of the creator Cr to the token tnA2 by updating the information indicating the benefit ratio on the basis of the information indicating the benefit ratio of the publisher Pb included in the transaction. With this arrangement, the token tnB1 including the information "Enc (20%)" indicating the benefit ratio is issued to the wallet 320 of the publisher Pb. Furthermore, the token tnA2, in which the information indicating the benefit ratio has been updated from "Enc (100%)" to "Enc (80%)", is issued to the wallet 310 of the creator Cr.

According to the above configuration, the information processing system 10 can issue the token tnB1 divided from the token tnA1 to the publisher Pb to which the consideration is distributed on the basis of the agreement. The publisher Pb can access the token tnB1 issued to the publisher Pb via its own wallet 320, and decrypt and confirm the information (Enc (20%)) indicating the benefit ratio included in the token tnB1 with the secret key stored in the wallet 320.

Furthermore, the information processing system 10 can update the token tnA1 to the token tnA2 by updating the information indicating the benefit ratio from "Enc (100%)" to "Enc (80%)". The creator Cr can decrypt and confirm the information "Enc (80%)" indicating the benefit ratio included in the updated token tnA2 with the secret key stored in the wallet 310.

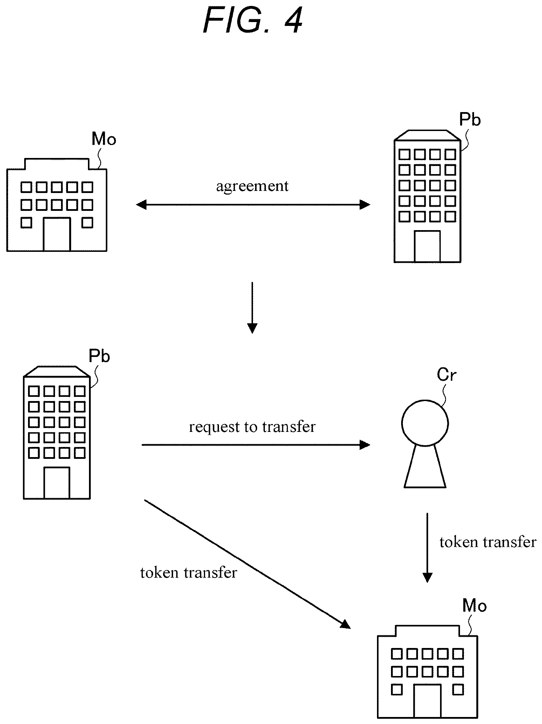

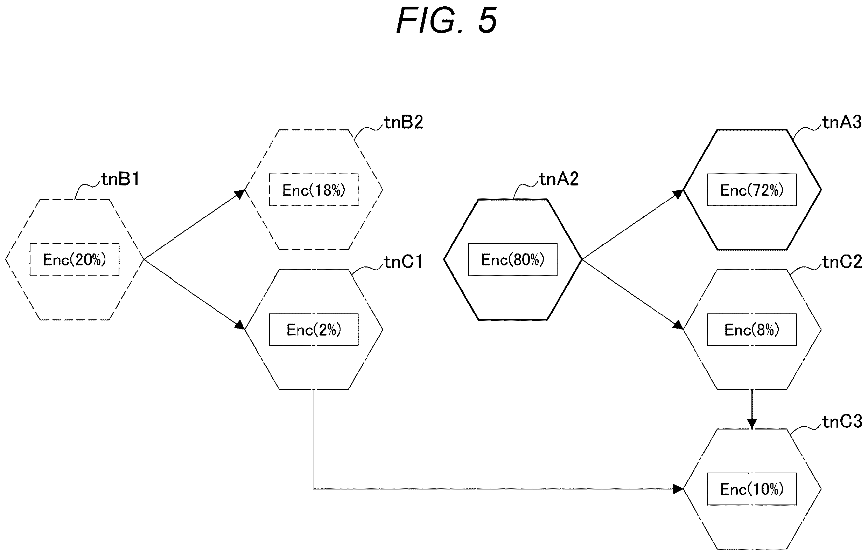

Here, the information processing system 10 can further distribute the token tn to a beneficiary who receives the consideration generated from the creation by the agreement. Fig. 4 is an explanatory diagram illustrating an example of further distributing the token tn from the creator Cr and the publisher Pb to the management organization Mo. Fig. 5 is an explanatory diagram illustrating division and integration of the token tn by the distribution illustrated in Fig. 4.

As illustrated in Fig. 4, in a case where an agreement to delegate the management of the use of the creation and the collection of the consideration is made between the publisher Pb and the management organization Mo, the management organization Mo can receive a part of the consideration generated from the creation on the basis of the agreement. Therefore, the publisher Pb distributes a part of the token tn held by the publisher Pb to the management organization Mo, and requests the creator Cr to distribute the token tn to the management organization Mo. With this arrangement, a part of the token tn is divided and distributed from the publisher Pb and the creator Cr to the management organization Mo.

For example, it is assumed that 10% of a consideration generated from a creation is required as a commission fee for the management of use of the creation and collection of the consideration by the management organization Mo. In such a case, the token tn corresponding to 10% of a benefit ratio of each of the publisher Pb and the creator Cr is issued from the wallets 310 and 320 of the creator Cr and the publisher Pb to the wallet 330 of the management organization Mo.

Specifically, as illustrated in Fig. 5, a part of the token tnB1 issued to the wallet 320 of the publisher Pb is divided, such that a token tnC1 including information "Enc (2%)" indicating a benefit ratio is issued to the wallet 330 of the management organization Mo. With this arrangement, the token tnB1 issued to the wallet 320 of the publisher Pb is updated to a token tnB2 by updating the information indicating a benefit ratio from "Enc (20%)" to "Enc (18%)".

Furthermore, a part of the token tnA2 issued to the wallet 310 of the creator Cr is further divided, such that a token tnC2 including information "Enc (8%)" indicating a benefit ratio is issued to the wallet 330 of the management organization Mo. With this arrangement, the token tnA2 issued to the wallet 310 of the creator Cr is updated to a token tnA3 by updating the information indicating a benefit ratio from "Enc (80%)" to "Enc (72%)".

Further, since the token tnC1 and the token tnC2 issued to the wallet 330 of the management organization Mo are compatible, they are integrated into a token tnC3. Information indicating a benefit ratio included in the token tnC3 is "Enc (10%)" obtained by adding "Enc (2%)" included in the token tnC1 and "Enc (8%)" included in the token tnC2.

According to the above, the information processing system 10 can manage the information regarding the distribution of the consideration on the blockchain 200 by issuing the divisible token tn to each of the beneficiaries who receive the consideration generated from the creation.

Furthermore, since the information indicating the benefit ratio included in the token tn issued to each of the beneficiaries is encrypted with the public key of each of the beneficiaries, only the beneficiary can decrypt the information indicating the benefit ratio. Therefore, the information processing system 10 can manage the information regarding the distribution of the consideration on the blockchain 200 while considering the privacy of each of the beneficiaries.

### (2.3. Configuration Related to Information Disclosure)

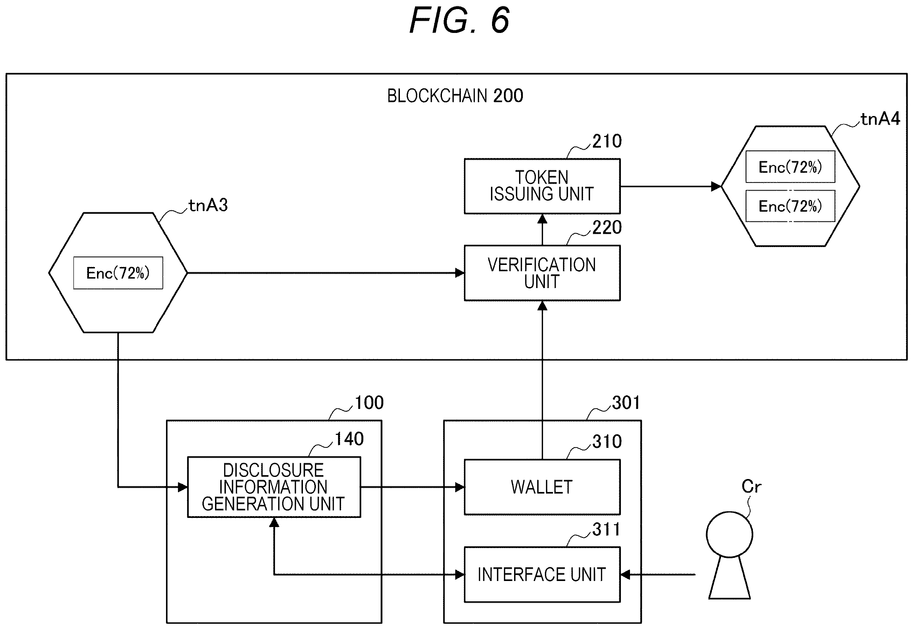

Fig. 6 is a block diagram for describing a configuration related to information disclosure of the token tnA3 in the information processing system 10. On the basis of an instruction from the creator Cr, the information processing system 10 can add information indicating a benefit ratio encrypted such that a selected viewer can decrypt the information to the token tnA3.

For example, in a case where the management organization Mo calculates the allocation of the consideration generated from the creation to each of the beneficiaries, the management organization Mo needs to know the benefit ratio of each of the beneficiaries of the consideration. However, since the information indicating the benefit ratio included in the token tn is encrypted such that only the beneficiary to whom the token tn has been issued can decrypt the information, it is difficult for the management organization Mo to know the benefit ratio of each of the beneficiaries of the consideration as is.

As described below, the information processing system 10 can further add information indicating the encrypted benefit ratio to the token tn after encrypting the information indicating the benefit ratio included in the token tn such that the management organization Mo can decrypt the information. According to this, since the management organization Mo can know the benefit ratio of each of the beneficiaries of the consideration, it is possible to calculate the allocation of the consideration generated from the creation to each of the beneficiaries.

As illustrated in Fig. 6, the information processing device 100 includes a disclosure information generation unit 140. The information processing terminal 301 operated by the creator Cr includes the wallet 310 and the interface unit 311.

### (Information Processing Terminal 301)

The wallet 310 stores the secret key of the creator Cr used for an electronic signature or the like, and generates a transaction to be transmitted to the blockchain 200. The creator Cr can decrypt the information included in the token tnA1, which has been encrypted with its own public key, by using the secret key stored in the wallet 310.

The interface unit 311 is an input/output interface of the information processing terminal 301. The creator Cr can instruct the management organization Mo to disclose information indicating the benefit ratio included in the token tnA3 via the interface unit 311.

### (Information Processing Device 100)

The disclosure information generation unit 140 generates information for adding information indicating the benefit ratio encrypted such that the selected viewer can decrypt the information to the token tnA3.

Specifically, in a case where an instruction to add information indicating the benefit ratio encrypted such that the management organization Mo can decrypt the information to the token tnA3 is input, the disclosure information generation unit 140 first acquires information "Enc (72%)" indicating a benefit ratio from the token tnA3. Next, the disclosure information generation unit 140 decrypts the acquired information indicating the benefit ratio with the secret key of the creator Cr. Note that the disclosure information generation unit 140 may acquire the secret key of the creator Cr in cooperation with the wallet 310, or may decrypt the information indicating the benefit ratio using the wallet 310 having the secret key of the creator Cr.

Subsequently, the disclosure information generation unit 140 re-encrypts the decrypted information indicating the benefit ratio with a public key of the management organization Mo. Further, the disclosure information generation unit 140 generates proof information for proving that the above process has been legitimately executed.

Thereafter, the disclosure information generation unit 140 transmits, to the wallet 310 of the creator Cr, the information indicating the benefit ratio encrypted with the public key of the management organization Mo and the proof information for proving that the process has been legitimately executed. Furthermore, the disclosure information generation unit 140 requests the wallet 310 to transmit a transaction for adding the information indicating the benefit ratio encrypted with the public key of the management organization Mo to the token tnA3. With this arrangement, the wallet 310 can transmit, to the verification unit 220 on the blockchain 200, the transaction for adding the information indicating the benefit ratio encrypted with the public key of the management organization Mo to the token tnA3. Note that the transaction transmitted on the blockchain 200 includes the proof information for proving that the process by the disclosure information generation unit 140 has been legitimately executed.

The verification unit 220 is a program implemented by the smart contract on the blockchain 200. The verification unit 220 verifies that the process of the disclosure information generation unit 140 has been legitimately executed by using the proof information included in the transmitted transaction and the information "Enc (72%)" indicating the benefit ratio acquired from the token tnA1.

For example, the verification unit 220 may verify that the process of the disclosure information generation unit 140 has been legitimately executed by zero knowledge proof (ZKP). The zero knowledge proof is a method by which a certifier (prover) proves to a verifier (verifier) that "his/her claim is true", without disclosing other information. According to this method, the verification unit 220 can verify the legitimacy of the process executed by the disclosure information generation unit 140 without knowing the content of the process executed by the disclosure information generation unit 140.

In a case where the legitimacy of the process is verified by the verification unit 220, the transaction transmitted on the blockchain 200 is further output to the token issuing unit 210.

The token issuing unit 210 is a program implemented by the smart contract on the blockchain 200. The token issuing unit 210 adds the information indicating the benefit ratio encrypted with the public key of the management organization Mo to the token tnA3 according to the transmitted transaction, thereby updating the token tnA3 to a token tnA4.

With this arrangement, the token tnA4 includes the information indicating the benefit ratio encrypted with the public key of the creator Cr and the information indicating the benefit ratio encrypted with the public key of the management organization Mo. Therefore, the management organization Mo can decrypt and confirm the information "Enc (72%)" indicating the benefit ratio included in the token tnA4 with the secret key of the management organization Mo stored in the wallet 330 by accessing the token tnA4 via the wallet 330.

According to the above configuration, the information processing system 10 can disclose the information indicating the benefit ratio to the viewer selected by the beneficiary to whom the token tn has been issued. Therefore, the information processing system 10 can cause the beneficiary himself/herself to whom the token tn has been issued to control a disclosure range of the information included in the token tn.

### (2.4. Configuration Related to Issuance of Consideration Information)

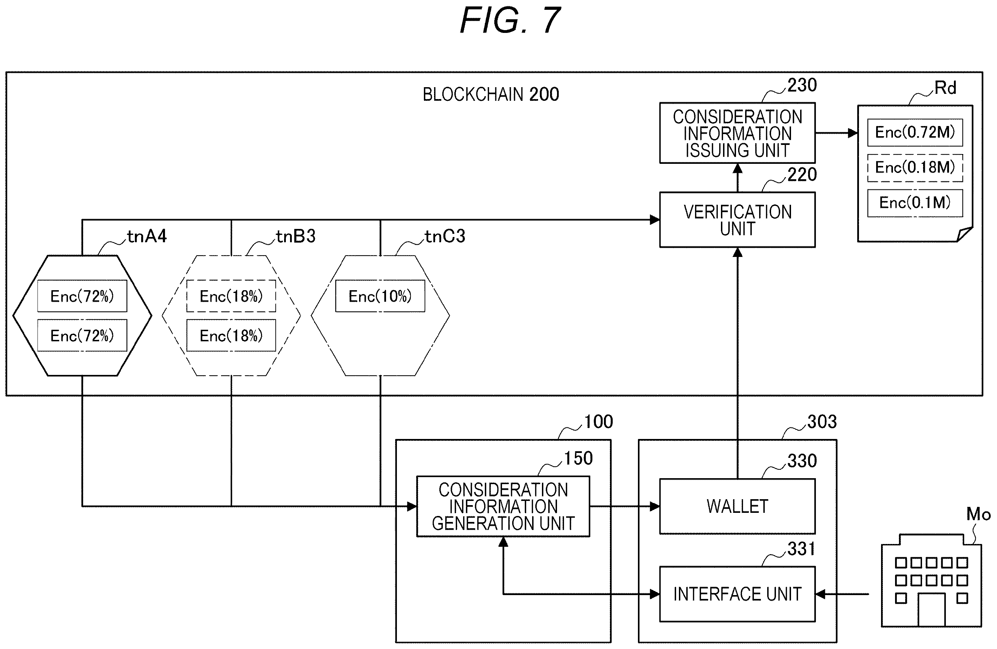

Fig. 7 is a block diagram for describing a configuration related to issuance of consideration information in the information processing system 10. On the basis of an instruction from the management organization Mo, the information processing system 10 can issue, on the blockchain 200, information regarding a consideration from a creation allocated to each of the creator Cr, the publisher Pb, and the management organization Mo.

For example, in a case where a consideration is generated from the use or the like of the creation, there may be a demand to grasp how much consideration is allocated to each of the creator Cr and the publisher Pb prior to the actual allocation of the consideration.

As described below, the information processing system 10 can calculate information regarding the consideration allocated to each of the beneficiaries and record the calculated information on the blockchain 200. However, the information regarding the consideration recorded on the blockchain 200 is encrypted such that only information regarding the consideration allocated to the beneficiary among the information regarding the consideration allocated to each of the beneficiaries can be decrypted. According to this, the information processing system 10 can record, on the blockchain 200, information regarding the consideration allocated to each of the beneficiaries while protecting the privacy of each of the beneficiaries.

As illustrated in Fig. 7, the information processing device 100 includes a consideration information generation unit 150. The information processing terminal 303 operated by the management organization Mo includes the wallet 330 and an interface unit 331.

### (Information Processing Terminal 303)

The wallet 330 stores a secret key of the management organization Mo used for an electronic signature or the like, and generates a transaction to be transmitted to the blockchain 200. The management organization Mo can transmit the transaction to the blockchain 200 via the wallet 330.

The interface unit 331 is an input/output interface of the information processing terminal 303. The management organization Mo can give an instruction to issue, on the blockchain 200 via the interface unit 331, information regarding the consideration allocated to each of the beneficiaries.

### (Information Processing Device 100)

The consideration information generation unit 150 generates information for issuing, on the blockchain 200, the information regarding the consideration allocated to each of the beneficiaries.

Specifically, the consideration information generation unit 150 first acquires information "Enc (72%)", "Enc (18%)", and "Enc (10%)" indicating the respective benefit ratios from the token tnA4, a token tnB3, and the token tnC3. Note that as described above, it is assumed that the information indicating the benefit ratio encrypted such that the management organization Mo can decrypt the information is added in advance to the token tnA4 and the token tnB3.

Next, the consideration information generation unit 150 decrypts the acquired information indicating the benefit ratio with the secret key of the management organization Mo. Note that the consideration information generation unit 150 may acquire the secret key of the management organization Mo in cooperation with the wallet 330, or may decrypt the information indicating the benefit ratio using the wallet 330 having the secret key of the management organization Mo.

Subsequently, the consideration information generation unit 150 calculates an amount of the consideration to be allocated to each of the beneficiaries by multiplying the decrypted information indicating the benefit ratio of each of the beneficiaries by a total amount of the consideration generated from the creation. For example, in a case where the total amount of the consideration generated from the creation is "1 M", an amount of the consideration allocated to the creator Cr is "0.72 M", an amount of the consideration allocated to the publisher Pb is "0.18 M", and an amount of the consideration allocated to the management organization Mo is "0.1 M".

Further, the consideration information generation unit 150 encrypts the amounts of the consideration allocated to each of the beneficiaries with the public keys of the creator Cr, the publisher Pb, and the management organization Mo, and generates information regarding the consideration allocated to each of the beneficiaries. That is, in the above example, "0.72 M" allocated to the creator Cr is encrypted with the public key of the creator Cr, "0.18 M" allocated to the publisher Pb is encrypted with the public key of the publisher Pb, and "0.1 M" allocated to the management organization Mo is encrypted with the public key of the management organization Mo. Thereafter, the consideration information generation unit 150 generates proof information for proving that the above process has been legitimately executed.

Next, the consideration information generation unit 150 transmits, to the wallet 330 of the management organization Mo, information regarding the consideration allocated to each of the beneficiaries and the proof information for proving that the process has been legitimately executed. Furthermore, the consideration information generation unit 150 requests the wallet 330 to transmit a transaction for issuing information regarding the consideration allocated to each of the beneficiaries on the blockchain 200. With this arrangement, the wallet 330 can transmit a transaction including the proof information and the information regarding the consideration allocated to each of the beneficiaries to the verification unit 220 on the blockchain 200.

The verification unit 220 is a program implemented by the smart contract on the blockchain 200. The verification unit 220 verifies that the process of the consideration information generation unit 150 has been legitimately executed by using the proof information included in the transmitted transaction and the information indicating the respective benefit ratios acquired from the token tnA4, the token tnB3, and the token tnC3.

For example, the verification unit 220 may verify that the process of the consideration information generation unit 150 has been legitimately executed by zero knowledge proof (ZKP). The zero knowledge proof is a method by which a certifier (prover) proves to a verifier (verifier) that "his/her claim is true", without disclosing other information. According to this method, the verification unit 220 can verify the legitimacy of the process executed by the consideration information generation unit 150 without knowing the content of the process executed by the consideration information generation unit 150.

In a case where the legitimacy of the process is verified by the verification unit 220, the transaction transmitted on the blockchain 200 is further output to a consideration information issuing unit 230.

The consideration information issuing unit 230 is a program implemented by the smart contract on the blockchain 200. The consideration information issuing unit 230 issues, on the blockchain 200, information regarding the consideration allocated to each of the beneficiaries included in the transmitted transaction as consideration information Rd. The consideration information Rd issued on the blockchain 200 is encrypted such that the beneficiary can decrypt only the amount of the consideration allocated to the beneficiary. Therefore, the information processing system 10 can record the consideration information Rd indicating the amount of the consideration allocated to each of the beneficiaries on the blockchain 200 so as not to be tampered with while protecting the privacy of the beneficiaries.

According to this, the creator Cr can decrypt and confirm the consideration "0.72 M" allocated to the creator Cr with the secret key of the creator Cr by accessing the consideration information Rd on the blockchain 200 via the wallet 310. Furthermore, the publisher Pb can decrypt and confirm the consideration "0.18 M" allocated to the publisher Pb with the secret key of the publisher Pb by accessing the consideration information Rd on the blockchain 200 via the wallet 320. Further, the management organization Mo can decrypt and confirm the consideration "0.1 M" allocated to the management organization Mo with the secret key of the management organization Mo by accessing the consideration information Rd on the blockchain 200 via the wallet 330.

### (2.5. Operation of Information Processing System)

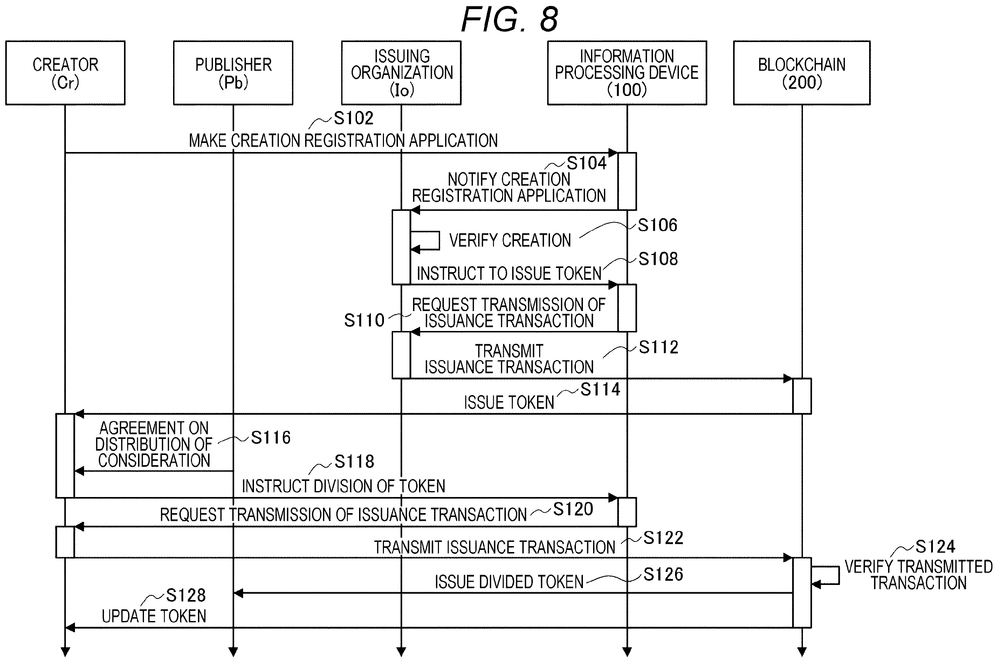

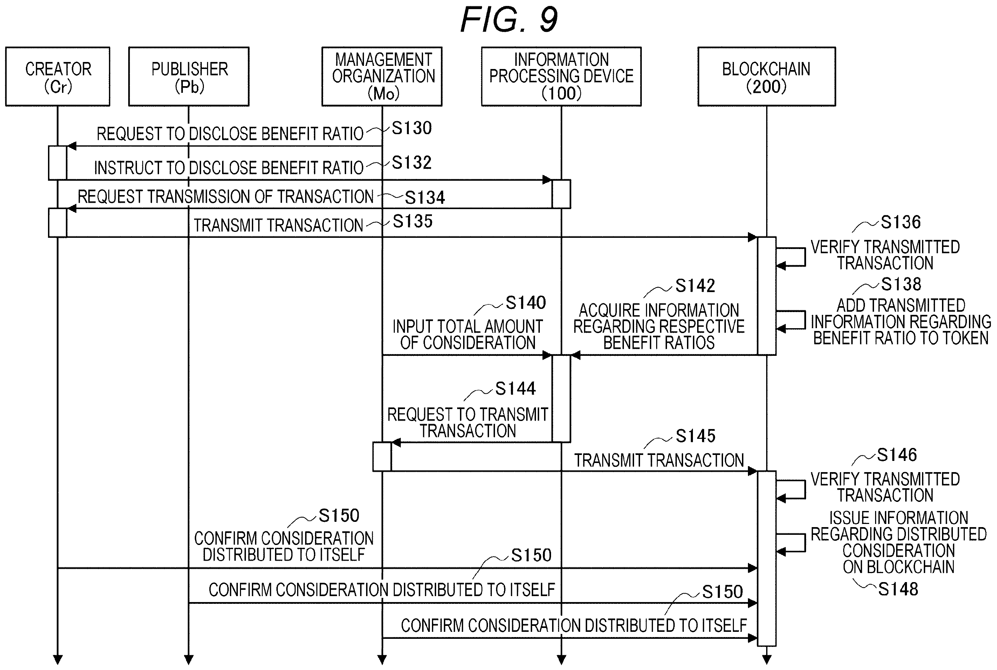

The operation of the information processing system 10 according to the first embodiment will be described with reference to Figs. 8 and 9. Figs. 8 and 9 are sequence diagrams for describing a flow of operation of the information processing system 10 according to the first embodiment. In Figs. 8 and 9, the flow from the issuance of the token tnA1 to the division of the token tnA1, the disclosure of the information, and the issuance of the consideration information is continuously illustrated.

As illustrated in Fig. 8, first, the creator Cr makes a creation registration application to the information processing device 100 (S102). When the information processing device 100 notifies the issuing organization Io of the creation registration application (S104), the issuing organization Io verifies the creation (S106). In a case where legitimacy and validity of the creation have been confirmed, the issuing organization Io determines to issue the token tnA1 to the creator Cr of the creation, and instructs the information processing device 100 to generate information for issuing the token tnA1 (S108).

Next, the information processing device 100 generates information for issuing the token tnA1, and requests transmission of the issuance transaction of the token tnA1 to the wallet 340 of the issuing organization Io (S110). With this arrangement, the wallet 340 of the issuing organization Io transmits the issuance transaction of the token tnA1 to the blockchain 200 (S112). The token issuing unit 210 on the blockchain 200 issues the token tnA1 to the wallet 310 of the creator Cr according to the transmitted issuance transaction (S114).

Thereafter, it is assumed that an agreement on distribution of the consideration generated from the creation is obtained between the creator Cr and the publisher Pb (S116). In such a case, the creator Cr divides the token tnA1, and instructs the information processing device 100 to generate information for issuing the token tnB1 generated by the division of the token tnA1 to the publisher Pb (S118). Specifically, the creator Cr instructs the information processing device 100 to generate information for issuing the token tnB1 to the publisher Pb and generate information for updating its own token tnA1 to the token tnA2.

Subsequently, the information processing device 100 generates information for issuing the token tnB1 to the publisher Pb, information for updating the token tnA1 to the token tnA2, and proof information. The information processing device 100 requests transmission of the issuance transaction of the token tnB1 to the wallet 310 of the creator Cr (S120). With this arrangement, the wallet 310 can transmit the issuance transaction of the token tnB1 to the blockchain 200 (S122).

The verification unit 220 on the blockchain 200 verifies that the process has been legitimately executed by the information processing device 100 on the basis of the proof information included in the transmitted issuance transaction (S124). In a case where the process has been legitimately executed, the token issuing unit 210 on the blockchain 200 divides the token tnA1 according to the transmitted issuance transaction, and issues the divided token tnB1 to the wallet 320 of the publisher Pb (S126). Furthermore, the token issuing unit 210 updates the token tnA1 issued to the wallet 310 of the creator Cr to the token tnA2 (S128).

Further, as illustrated in Fig. 9, for example, it is assumed that the management organization Mo requests the creator Cr to disclose a benefit ratio of a token tnA3 (S130). In such a case, the creator Cr instructs the information processing device 100 to generate information for disclosing the benefit ratio (S132). The information processing device 100 acquires information indicating the benefit ratio from the token tnA3 and encrypts the information with the public key of the management organization Mo. Next, the information processing device 100 requests transmission of a transaction including the information encrypted with the public key of the management organization Mo and proof information to the wallet 310 of the creator Cr (S134). With this arrangement, the wallet 310 can transmit a transaction for adding the information to the token tnA3 to the blockchain 200 (S135).

The verification unit 220 on the blockchain 200 verifies that the process has been legitimately executed by the information processing device 100 on the basis of the proof information included in the transmitted transaction (S136). In a case where the process has been legitimately executed, the token issuing unit 210 on the blockchain 200 adds the information indicating the benefit ratio encrypted with the public key of the management organization Mo to the token tnA3 according to the transmitted transaction (S138).

Further, it is assumed that a total amount of the consideration is input from the management organization Mo to the information processing device 100 (S140). In such a case, the information processing device 100 acquires information indicating the respective benefit ratios from the tokens tnA4, tnB3, and tnC3 issued to the creator Cr, the publisher Pb, and the management organization Mo (S142). Subsequently, the information processing device 100 generates information regarding the consideration allocated to each of the beneficiaries and proof information, and requests the wallet 330 of the management organization Mo to transmit a transaction for issuing consideration information Rd on the blockchain 200 (S144). With this arrangement, the wallet 330 can transmit the transaction for issuing the consideration information Rd on the blockchain 200 to the blockchain 200 (S145).

The verification unit 220 on the blockchain 200 verifies that the process has been legitimately executed by the information processing device 100 on the basis of the proof information included in the transmitted transaction (S146). In a case where the process has been legitimately executed, the consideration information issuing unit 230 on the blockchain 200 issues the consideration information Rd on the blockchain 200 according to the transmitted transaction (S148). With this arrangement, each of the creator Cr, the publisher Pb, and the management organization Mo can confirm the amount of the consideration distributed to each of the creator Cr, the publisher Pb, and the management organization Mo by decrypting and confirming the information included in the consideration information Rd issued on the blockchain 200 (S150).

According to the above operation, the information processing system 10 according to the first embodiment can manage the benefit ratio of the consideration generated from the use or the like of the creation by the token tn operating on the blockchain 200. According to this, the information processing system 10 according to the first embodiment can manage the benefit ratio of the consideration using the token tn that operates on the blockchain 200 having high tamper resistance. Since the token tn operating on the blockchain 200 is a semi-fungible token (SFT), the token tn can be issued to each of the beneficiaries in a divided or integrated manner while being associated with the creation on a one-to-one basis.

Furthermore, the information processing system 10 according to the first embodiment can encrypt information included in the token tn operating on the blockchain 200 and verify a transaction transmitted to the blockchain 200 with zero knowledge proof (ZKP). Therefore, the information processing system 10 according to the first embodiment can more safely manage the information regarding the benefit ratio of the consideration generated from the use or the like of the creation.

### <3. Second Embodiment>

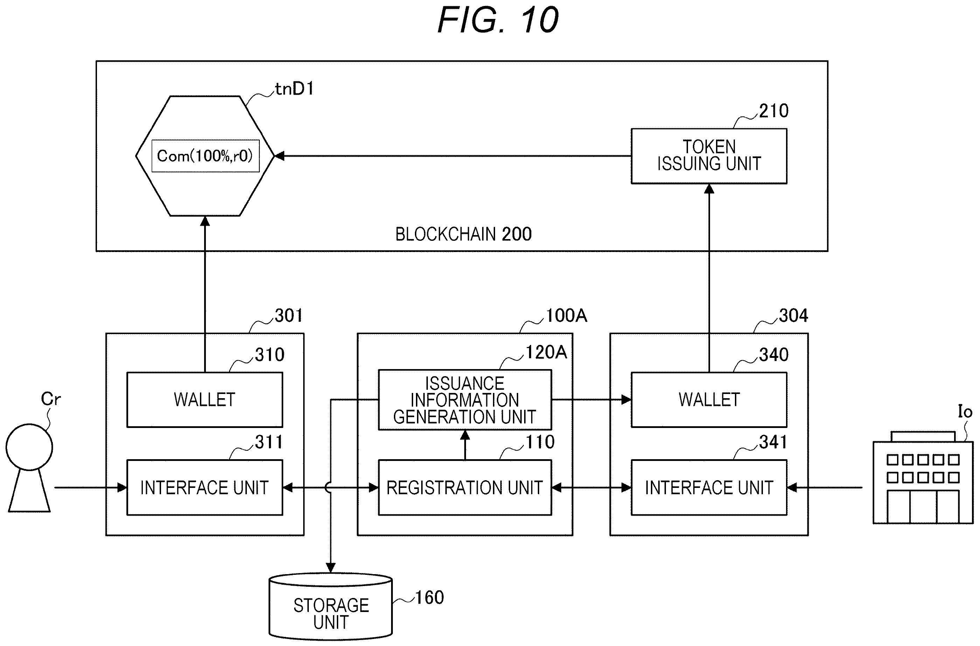

A functional configuration of the information processing system 10 according to a second embodiment of the present disclosure will be described with reference to Figs. 10 to 13. Hereinafter, configurations related to each of issuance of the token tn, division of the token tn, and issuance of consideration information will be separately described. Note that in the following, each of the issued tokens is expressed as a token tn in a case of not being distinguished, and each of the tokens is expressed as tokens tnD1 to tnF2 in a case of being distinguished. The information processing system 10 according to the second embodiment hashes information regarding a benefit ratio of a consideration and manages the information on the blockchain 200 as a commitment. According to this, the information processing system 10 can verify the legitimacy of the information regarding the benefit ratio of the consideration stored in the storage device different from the blockchain 200 by comparison with the information on the blockchain 200.

### (3.1. Configuration Related to Token Issuance)

Fig. 10 is a block diagram for describing a configuration related to issuance of a token tnD1 in the information processing system 10. The information processing system 10 can issue the token tnD1 indicating a benefit ratio of a consideration generated from a creation to the creator Cr on the basis of registration of the creation from the creator Cr.

As illustrated in Fig. 10, an information processing device 100A includes a registration unit 110 and an issuance information generation unit 120A. The information processing terminal 301 operated by the creator Cr includes the wallet 310 and the interface unit 311. The information processing terminal 304 operated by the issuing organization Io includes the wallet 340 and the interface unit 341.

### (Information Processing Terminal 301)

The wallet 310 stores the secret key of the creator Cr used for an electronic signature or the like, and generates a transaction to be transmitted to the blockchain 200.

The interface unit 311 is an input/output interface of the information processing terminal 301. The creator Cr can apply for the registration of the creation and request the issuing organization Io to issue the token tnD1 via the interface unit 311.

### (Information Processing Terminal 304)

The wallet 340 stores a secret key of the issuing organization Io used for an electronic signature or the like, and generates a transaction to be transmitted to the blockchain 200. For example, the wallet 340 can generate a transaction for issuing the token tnD1 to the creator Cr who has registered the creation.

The interface unit 341 is an input/output interface of the information processing terminal 304. The issuing organization Io can verify the creation for which registration has been applied for and give an instruction to issue the token tnD1 via the interface unit 341.

### (Information Processing Device 100A)

The registration unit 110 registers a creation created by the creator Cr. Specifically, the registration unit 110 requests the issuing organization Io to verify the received creation by receiving the creation registration application from the creator Cr. The issuing organization Io verifies legitimacy and validity of the creation for which the registration has been applied for. In a case where the registration of the creation is permitted, the issuing organization Io instructs the information processing device 100A to issue the token tnD1 corresponding to the creation.

The issuance information generation unit 120A generates information for issuing the token tnD1 to the creator Cr of the registered creation. Specifically, the issuance information generation unit 120A first calculates a hash value by using a benefit ratio (100%) of the consideration generated from the creation and a random number r0, and generates information for requesting an issuance transaction of the token tnD1 including the calculated hash value as a commitment. A known hash function such as MD5, SHA-2, or SHA-3 may be used to calculate the hash value.

The benefit ratio (100%) and the random number r0 used for calculating the hash value of the token tnD1 are stored in the storage unit 160 provided inside or outside the information processing device 100A in association with the token tnD1. The storage unit 160 may store the benefit ratio (100%) and the random number r0 in plaintext (that is, without encryption).

Next, the issuance information generation unit 120A transmits the calculated hash value to the wallet 340 of the issuing organization Io, and requests the wallet 340 of the issuing organization Io to transmit the issuance transaction of the token tnD1. With this arrangement, the wallet 340 can transmit the issuance transaction of the token tnD1 including the hash value generated by using the benefit ratio (100%) and the random number r0 as the commitment to the token issuing unit 210 on the blockchain 200.

The token issuing unit 210 is a program implemented by the smart contract on the blockchain 200. The token issuing unit 210 issues the token tnD1 to the wallet 310 of the creator Cr according to the transmitted transaction. The issued token tnD1 is a divisible semi-fungible token (SFT) that includes, as a commitment, the hash value generated by using the benefit ratio (100%) and the random number r0.

According to the above configuration, the information processing system 10 can issue the token tnD1 including the information regarding the benefit ratio of the consideration for the creation to the creator Cr who has registered the creation.

Since information such as a commitment included in the token tnD1 is recorded on the blockchain 200, making the information extremely difficult to tamper with. Therefore, the information processing system 10 can verify that the information stored in the storage unit 160 has not been tampered with by comparing the information stored in the storage unit 160 with the information included in the token tnD1. Specifically, the information processing system 10 can verify that the information stored in the storage unit 160 has not been tampered with by confirming matching between the hash value recalculated by using the benefit ratio (100%) and the random number r0 stored in the storage unit 160 and the hash value included in the token tnD1 as a commitment.

### (3.2. Configuration Related to Token Division)

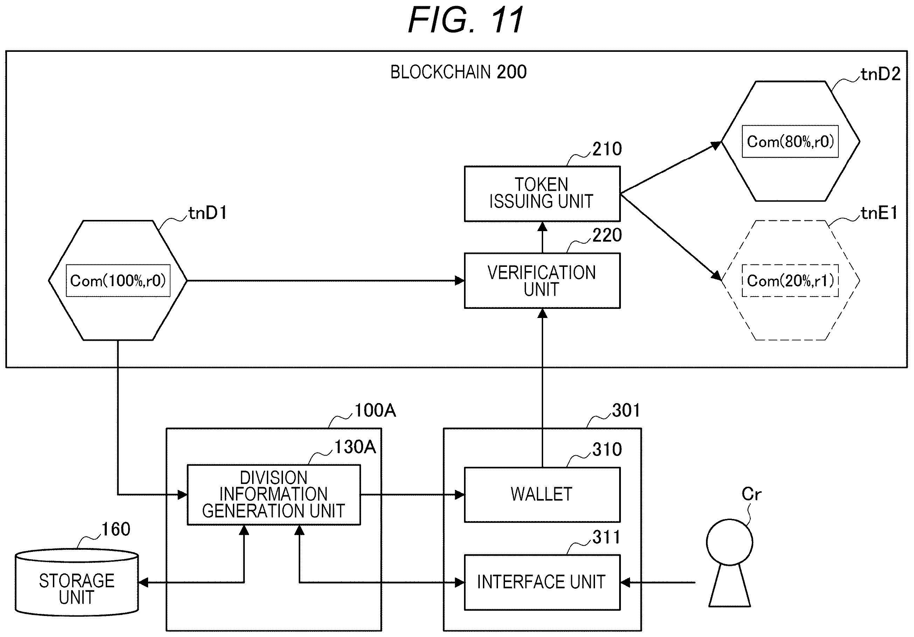

Fig. 11 is a block diagram for describing a configuration related to division of the token tnD1 in the information processing system 10. The information processing system 10 can issue a token tnE1 generated by the division of the token tnD1 to the publisher Pb on the basis of the instruction from the creator Cr. Furthermore, the information processing system 10 can update the token tnD1 after dividing the token tnE1 to the token tnD2. According to this, the information processing system 10 can record that the publisher Pb is the beneficiary of the consideration on the blockchain 200 by issuing the token tnE1 to the publisher Pb.

As illustrated in Fig. 11, the information processing device 100A includes a division information generation unit 130A. The information processing terminal 301 operated by the creator Cr includes the wallet 310 and the interface unit 311.

### (Information Processing Terminal 301)

The wallet 310 stores the secret key of the creator Cr used for an electronic signature or the like, and generates a transaction to be transmitted to the blockchain 200.

The interface unit 311 is an input/output interface of the information processing terminal 301. The creator Cr can instruct, via the interface unit 311, to issue the token tnE1 generated by the division of the token tnD1 to the publisher Pb.

### (Information Processing Device 100A)

The division information generation unit 130A divides the token tnD1 and generates information for issuing the token tnE1 generated by the division of the token tnD1 to the publisher Pb.

Specifically, in a case where an instruction to move a part (for example, 20%) of the benefit ratio (100%) owned by the creator Cr to the publisher Pb is input, the division information generation unit 130A first acquires a commitment "Com(100%, r0)" from the token tnD1. The commitment "Com(100%, r0)" includes the hash value generated by using the benefit ratio (100%) and the random number r0. Subsequently, the division information generation unit 130A acquires the benefit ratio (100%) and the random number r0 stored in the storage unit 160 in association with the token tnD1 from the storage unit 160, and recalculates the hash value by using the acquired information. Next, the division information generation unit 130A confirms whether or not the recalculated hash value matches the hash value included in the commitment "Com(100%, r0)".

The hash function is a function designed such that the same hash value is generated from the same input and the same hash value is not generated from different inputs (so-called collision). Therefore, in a case where the recalculated hash value matches the hash value included in the commitment "Com(100%, r0)", the division information generation unit 130A can determine that the benefit ratio (100%) acquired from storage unit 160 has not been tampered with.

On the other hand, in a case where the recalculated hash value does not match the hash value included in the commitment "Com(100%, r0)", the division information generation unit 130A may stop the division processing of the token tnD1 and notify the creator Cr that there is a possibility that the benefit ratio (100%) acquired from the storage unit 160 has been tampered with.

Subsequently, the division information generation unit 130A divides the information indicating the benefit ratio by the instructed allocation (for example, 20%:80%). The division information generation unit 130A calculates a hash value by using the benefit ratio (20%) of the publisher Pb and a random number r1, and calculates a hash value by using the benefit ratio (80%) of the creator Cr and the random number r0. Further, the division information generation unit 130A generates proof information for proving that the above process has been legitimately executed.

The benefit ratio (20%) and the random number r1 used to calculate a hash value of the token tnE1 are stored in the storage unit 160 provided inside or outside the information processing device 100A in association with the token tnE1. Furthermore, the benefit ratio (100%) and the random number r0 associated with the token tnD1 are updated to the benefit ratio (80%) and the random number r0 used for calculating a hash value of the token tnD2 and stored in the storage unit 160. The storage unit 160 may store the benefit ratio and the random number in plaintext (that is, without encryption).

Thereafter, the division information generation unit 130A transmits the hash value calculated by using the benefit ratio (20%) of the publisher Pb and the random number r1, the hash value calculated by using the benefit ratio (80%) of the creator Cr and the random number r0, and proof information for proving that the process has been legitimately executed to the wallet 310 of the creator Cr. Furthermore, the division information generation unit 130A requests the wallet 310 to transmit an issuance transaction of the token tnE1. With this arrangement, the wallet 310 can transmit the issuance transaction of the token tnE1 including the proof information and the respective hash values to the verification unit 220 on the blockchain 200.

The verification unit 220 is a program implemented by the smart contract on the blockchain 200. By using the proof information included in the transmitted transaction and the commitment "Com(100%, r0)" acquired from the token tnD1, the verification unit 220 verifies that the process of the division information generation unit 130A has been legitimately executed.

For example, the verification unit 220 may verify that the process of the division information generation unit 130A has been legitimately executed by zero knowledge proof (ZKP). The zero knowledge proof is a method by which a certifier (prover) proves to a verifier (verifier) that "his/her claim is true", without disclosing other information. According to this method, the verification unit 220 can verify the legitimacy of the process executed by the division information generation unit 130A without knowing the content of the process executed by the division information generation unit 130A.

In a case where the legitimacy of the process is verified by the verification unit 220, the transaction transmitted on the blockchain 200 is further output to the token issuing unit 210.

The token issuing unit 210 is a program implemented by the smart contract on the blockchain 200. The token issuing unit 210 issues the token tnD2 and the token tnE1 by dividing the token tnD1 according to the transmitted transaction. Since the token tnD1 is a divisible semi-fungible token (SFT), the token tnD1 can be divided into the token tnD2 and the token tnE1.

Specifically, the token issuing unit 210 issues, to the wallet 320 of the publisher Pb, the token tnE1 including, as a commitment, the hash value calculated by using a benefit ratio (20%) of the publisher Pb included in the transaction and the random number r1. Furthermore, the token issuing unit 210 updates the commitment with a hash value calculated by using the benefit ratio (80%) of the creator Cr included in the transaction and the random number r0, thereby updating the token tnD1 issued to the wallet 310 of the creator Cr to the token tnD2. With this arrangement, the token tnE1 including the commitment "Com(20%, r1)" is issued to the wallet 320 of the publisher Pb. Furthermore, the token tnD2 with the commitment updated from "Com(100%, r0)" to "Com(80%, r0)" is issued to the wallet 310 of the creator Cr.

According to the above configuration, the information processing system 10 can issue the token tnE1 divided from the token tnD1 to the publisher Pb to which the consideration is distributed on the basis of the agreement. The publisher Pb can access the token tnE1 issued to the publisher Pb via the wallet 320 of the publisher Pb. Furthermore, the information processing system 10 can update the token tnD1 to the token tnD2 by updating the commitment from "Com(100%, r0)" to "Com(80%, r0)".

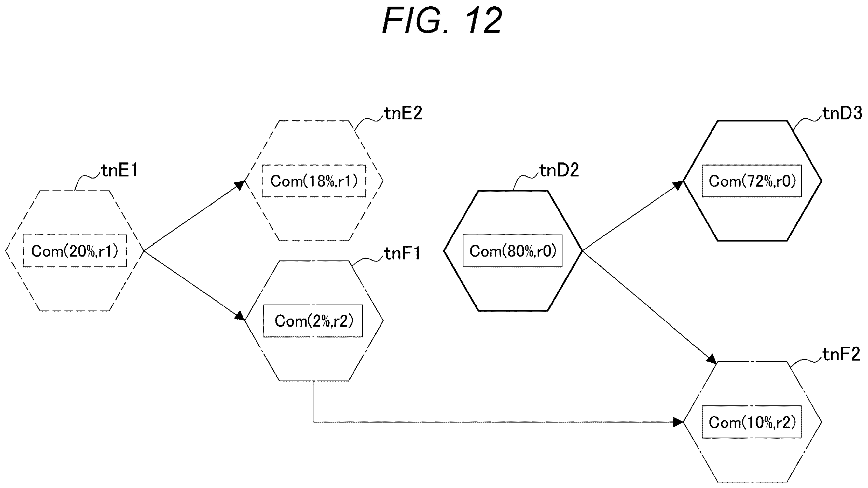

Similarly, the information processing system 10 can further distribute the token tn to the beneficiary who receives the consideration generated from the creation by the agreement. Fig. 12 is an explanatory diagram illustrating an example of further dividing and integrating the token tn from the creator Cr and the publisher Pb.

For example, in a case where an agreement to delegate the management of the use of the creation and the collection of the consideration is made between the publisher Pb and the management organization Mo, the management organization Mo can receive a part of the consideration generated from the creation on the basis of the agreement. Therefore, the publisher Pb distributes a part of the token tn held by the publisher Pb to the management organization Mo, and requests the creator Cr to distribute the token tn to the management organization Mo. With this arrangement, a part of the token tn is distributed from the publisher Pb and the creator Cr to the management organization Mo.

For example, it is assumed that 10% of a consideration generated from a creation is required as a commission fee for the management of use of the creation and collection of the consideration by the management organization Mo. In such a case, the token tn corresponding to 10% of the benefit ratio of each of the publisher Pb and the creator Cr is distributed from the wallets 310 and 320 of the creator Cr and the publisher Pb to the wallet 330 of the management organization Mo.

Specifically, as illustrated in Fig. 12, a part of the token tnE1 issued to the wallet 320 of the publisher Pb is divided, such that the token tnF1 including a hash value calculated by using the benefit ratio (2%) and the random number r2 as the commitment is issued to the wallet 330 of the management organization Mo. With this arrangement, the token tnE1 issued to the wallet 320 of the publisher Pb is updated to the token tnE2 by updating the commitment. Specifically, the commitment of the token tnE2 is updated from a hash value (that is the commitment of the token tnE1) calculated by using the benefit ratio (18%) and the random number r1 to the hash value calculated by using the benefit ratio (18%) and the random number r1.

The benefit ratio (2%) and the random number r2 used for calculating a hash value of the token tnF1 are stored in the storage unit 160 provided inside or outside the information processing device 100A in association with the token tnF1. Furthermore, the benefit ratio (20%) and the random number r1 associated with the token tnE1 are updated to the benefit ratio (18%) and the random number r1 used for calculating the hash value of the token tnE2 and stored in the storage unit 160. The storage unit 160 may store the benefit ratio and the random number in plaintext (that is, without encryption).

Furthermore, a part of the token tnD2 issued to the wallet 310 of the creator Cr is further divided, such that the token tnF2 including a hash value calculated by using the benefit ratio (10%) and the random number r2 as a commitment is issued to the wallet 330 of the management organization Mo.

With this arrangement, the token tnF1 issued to the wallet 330 of the management organization Mo is updated to the token tnF2 by updating the commitment. Specifically, the commitment of the token tnF2 is updated from the hash value (that is the commitment of the token tnF1) calculated by using the benefit ratio (2%) and the random number r2 to the hash value calculated by using the benefit ratio (10%) and the random number r2. Furthermore, the token tnD2 issued to the wallet 310 of the creator Cr is updated to the token tnD3 by updating the commitment. Specifically, the commitment of the token tnD3 is updated from the hash value (that is the commitment of the token tnD2) calculated by using the benefit ratio (80%) and the random number r0 to a hash value calculated by using the benefit ratio (72%) and the random number r0.

The benefit ratio (2%) and the random number r2 associated with the token tnF1 are updated to the benefit ratio (10%) and the random number r2 used for calculating a hash value of the token tnF2 and stored in the storage unit 160 provided inside or outside the information processing device 100A. Furthermore, the benefit ratio (80%) and the random number r0 associated with the token tnD2 are updated to the benefit ratio (72%) and the random number r0 used for calculating a hash value of the token tnD3 and stored in the storage unit 160. The storage unit 160 may store the benefit ratio and the random number in plaintext (that is, without encryption).

According to the above, the information processing system 10 can manage the information regarding the distribution of the consideration on the blockchain 200 by issuing the divisible token tn to each of the beneficiaries who receive the consideration generated from the creation. Since the commitment included in the token tn issued to each of the beneficiaries is hashed, the information processing system 10 can manage the information regarding the distribution of the consideration on the blockchain 200 without publishing the benefit ratio of each of the beneficiaries.

### (3.3. Configuration Related to Issuance of Consideration Information)

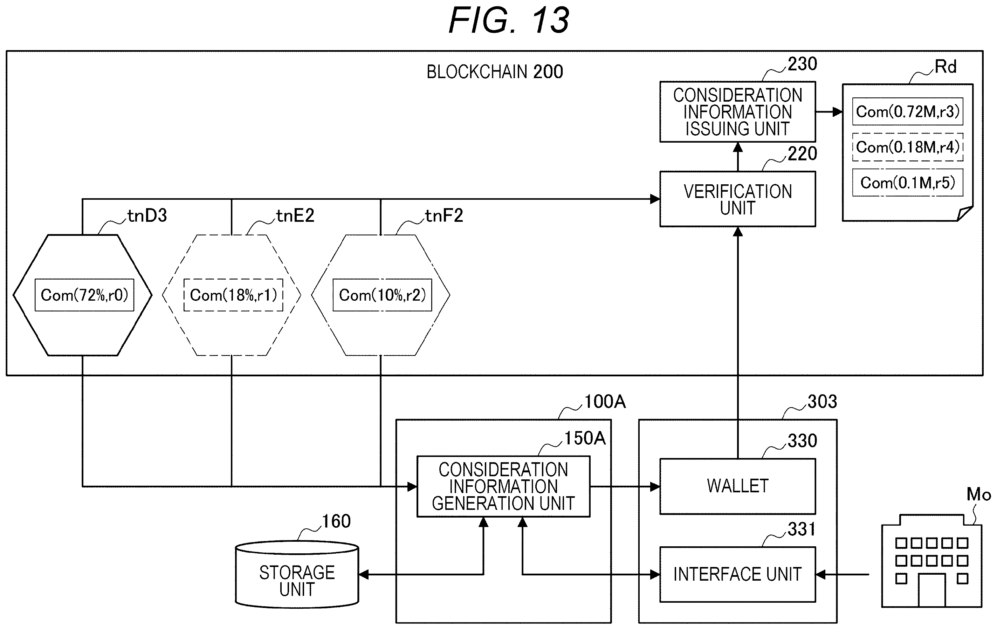

Fig. 13 is a block diagram for describing a configuration related to issuance of consideration information in the information processing system 10. On the basis of an instruction from the management organization Mo, the information processing system 10 can issue, on the blockchain 200, information regarding a consideration from a creation allocated to each of the creator Cr, the publisher Pb, and the management organization Mo.

Specifically, the information processing system 10 can calculate the information regarding the consideration allocated to each of the beneficiaries, and record the calculated information on the blockchain 200 as a commitment obtained by hashing the calculated information. According to this, the information processing system 10 can record, on the blockchain 200, the information regarding the consideration allocated to each of the beneficiaries.

As illustrated in Fig. 13, the information processing device 100A includes a consideration information generation unit 150A. The information processing terminal 303 operated by the management organization Mo includes the wallet 330 and the interface unit 331.

### (Information Processing Terminal 303)

The wallet 330 stores the secret key of the management organization Mo used for an electronic signature or the like, and generates a transaction to be transmitted to the blockchain 200. The management organization Mo can transmit the transaction to the blockchain 200 via the wallet 330.

The interface unit 331 is an input/output interface of the information processing terminal 303. The management organization Mo can give an instruction to issue, on the blockchain 200 via the interface unit 331, information regarding the consideration allocated to each of the beneficiaries.

### (Information Processing Device 100A)

The consideration information generation unit 150A generates information for issuing, on the blockchain 200, the information regarding the consideration allocated to each of the beneficiaries.

Specifically, the consideration information generation unit 150A first acquires commitments "Com(72%, r0)", "Com(18%, r1)", and "Com(10%, r2)" from the token tnD3, the token tnE2, and the token tnF2. The commitment "Com(72%, r0)" includes a hash value generated by using a benefit ratio (72%) and a random number r0. The commitment "Com(18%, r1)" includes a hash value generated by using a benefit ratio (18%) and a random number r1. The commitment "Com(10%, r2)" includes a hash value generated by using a benefit ratio (10%) and a random number r2.

Subsequently, the consideration information generation unit 150A acquires the benefit ratio (72%) and the random number (r0) stored in the storage unit 160 in association with the token tnD3 from the storage unit 160, and recalculates the hash value by using the acquired information. The consideration information generation unit 150A confirms whether or not the recalculated hash value matches the hash value included in the commitment "Com(72%, r0)". Furthermore, the consideration information generation unit 150A acquires the benefit ratio (18%) and the random number (r1) stored in the storage unit 160 in association with the token tnE2 from the storage unit 160, and recalculates the hash value by using the acquired information. The consideration information generation unit 150A confirms whether or not the recalculated hash value matches the hash value included in the commitment "Com(18%, r1)". Further, the consideration information generation unit 150A acquires the benefit ratio (10%) and the random number (r2) stored in the storage unit 160 in association with the token tnF2 from the storage unit 160, and recalculates the hash value by using the acquired information. The consideration information generation unit 150A confirms whether or not the recalculated hash value matches the hash value included in the commitment "Com(10%, r2)". In a case where the match of the hash values is confirmed, it is proved that the respective benefit ratios stored in the storage unit 160 have not been tampered with and have legitimacy.

Thereafter, the consideration information generation unit 150A calculates an amount of the consideration to be allocated to each of the beneficiaries by multiplying the benefit ratio of each of the beneficiaries by a total amount of the consideration generated from the creation. In the benefit ratio stored in the storage unit 160, ratios of the consideration allocated to each of the creator Cr, the publisher Pb, and the management organization Mo are 72%, 18%, and 10%. Therefore, for example, in a case where the total amount of the consideration generated from the creation is "1 M", an amount of the consideration allocated to the creator Cr is "0.72 M", an amount of the consideration allocated to the publisher Pb is "0.18 M", and an amount of the consideration allocated to the management organization Mo is "0.1 M".

Therefore, the consideration information generation unit 150A calculates the hash value by using the amount of the consideration distributed to each of the beneficiaries and the random number, thereby generating information regarding the consideration allocated to each of the beneficiaries. That is, in the above example, the hash value is calculated by using "0.72 M" allocated to the creator Cr and a random number r3, the hash value is calculated by using "0.18 M" allocated to the publisher Pb and a random number r4, and the hash value is calculated by using "0.1 M" allocated to the management organization Mo and a random number r5. Thereafter, the consideration information generation unit 150A generates proof information for proving that the above process has been legitimately executed.

The amount of the consideration (0.72 M) and the random number r3 used for the calculation of the hash value are stored in the storage unit 160 provided inside or outside the information processing device 100A in association with the creator Cr who is the beneficiary. Furthermore, the amount of the consideration (0.18 M) and the random number r4 are stored in the storage unit 160 in association with the publisher Pb as the beneficiary, and the amount of the consideration (0.1 M) and the random number r5 are stored in the storage unit 160 in association with the management organization Mo as the beneficiary. The storage unit 160 may store these amounts of the consideration and the random number in plaintext (that is, without encryption).

Next, the consideration information generation unit 150A transmits a hash value calculated by using the amount of the consideration allocated to each of the beneficiaries and the random number, and proof information for proving that the process has been legitimately executed to the wallet 330 of the management organization Mo. Furthermore, the consideration information generation unit 150A requests the wallet 330 to transmit a transaction for issuing the calculated hash value as the consideration information Rd on the blockchain 200. With this arrangement, the wallet 330 can transmit a transaction including the proof information and the calculated hash value to the verification unit 220 on the blockchain 200.

The verification unit 220 is a program implemented by the smart contract on the blockchain 200. The verification unit 220 verifies that the process of the consideration information generation unit 150A has been legitimately executed by using the proof information included in the transmitted transaction, and the commitments "Com(72%, r0)", "Com(18%, r1)", and "Com(10%, r2)" acquired from the token tnD3, the token tnE2, and the token tnF2.

For example, the verification unit 220 may verify that the process of the consideration information generation unit 150A has been legitimately executed by zero knowledge proof (ZKP). The zero knowledge proof is a method by which a certifier (prover) proves to a verifier (verifier) that "his/her claim is true", without disclosing other information. According to this method, the verification unit 220 can verify the legitimacy of the process executed by the consideration information generation unit 150A without knowing the content of the process executed by the consideration information generation unit 150A.

In a case where the legitimacy of the process is verified by the verification unit 220, the transaction transmitted on the blockchain 200 is further output to the consideration information issuing unit 230.

The consideration information issuing unit 230 is a program implemented by the smart contract on the blockchain 200. The consideration information issuing unit 230 issues the hash value included in the transmitted transaction as the consideration information Rd on the blockchain 200.

In the consideration information Rd issued on the blockchain 200, the amount of the consideration allocated to each of the beneficiaries is hashed by using a random number. Therefore, the information processing system 10 can record the consideration information Rd based on the amount of the consideration on the blockchain 200 without publishing the amount of the consideration allocated to each of the beneficiaries. According to this, the information processing system 10 can verify that the amount of the consideration stored in the storage unit 160 has not been tampered with by comparing the hash value included in the consideration information Rd recorded on the blockchain 200 with the hash value recalculated by using the amount of the consideration and the random number stored in the storage unit 160.

### <4. Hardware Configuration>

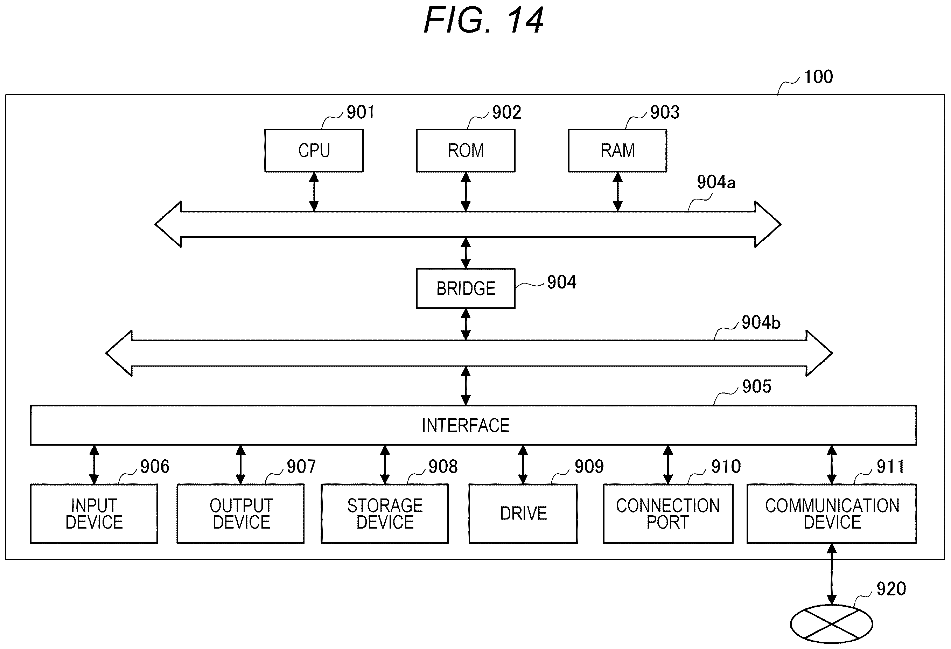

Next, a hardware configuration of the information processing device 100 will be described with reference to Fig. 14. Fig. 14 is a block diagram illustrating a hardware configuration example of the information processing device 100.

Functions of the information processing device 100 can be implemented by cooperation of software and hardware described below. The functions of the registration unit 110, the issuance information generation unit 120, the division information generation unit 130, the disclosure information generation unit 140, and the consideration information generation unit 150 may be executed by a CPU 901, for example.

The functions of the information processing device 100 may be implemented only by the information processing device 100 or may be implemented by cooperation of the information processing device 100 and the information processing terminals 301, 302, 303, and 304. Furthermore, the above-described various types of functions may be implemented by a program that causes the information processing device 100 and the information processing terminals 301, 302, 303, and 304 to cooperate with each other.

As illustrated in Fig. 10, the information processing device 100 includes the central processing unit (CPU) 901, a read only memory (ROM) 902, and a random access memory (RAM) 903.

Furthermore, the information processing device 100 may further include a host bus 904a, a bridge 904, an external bus 904b, an interface 905, an input device 906, an output device 907, a storage device 908, a drive 909, a connection port 910, or a communication device 911. The information processing device 100 may include a processing circuit such as a digital signal processor (DSP) or an application specific integrated circuit (ASIC) instead of or in addition to the CPU 901.

The CPU 901 functions as an arithmetic processing device or a control device, and controls the operation of the information processing device 100 according to various types of programs recorded on a removable recording medium attached to the ROM 902, the RAM 903, the storage device 908, or the drive 909. The ROM 902 stores programs, calculation parameters, and the like used by the CPU 901. The RAM 903 temporarily stores a program used in execution by the CPU 901, and parameters used during the execution, and the like.

The CPU 901, the ROM 902, and the RAM 903 are mutually connected by the host bus 904a capable of high-speed data transmission. The host bus 904a is connected to the external bus 904b such as a peripheral component interconnect/interface (CI) bus via the bridge 904, and the external bus 904b is connected to various components via the interface 905.

The input device 906 is, for example, a device that accepts an input from a user, such as a mouse, a keyboard, a touch panel, a button, a switch, or a lever. Note that the input device 906 may be a microphone or the like that detects voice of the user. The input device 906 may be, for example, a remote control device using infrared rays or other radio waves, or may be an external connection device corresponding to an operation of the information processing device 100.

The input device 906 further includes an input control circuit that outputs an input signal generated on the basis of information input by the user to the CPU 901. The user can input various types of data or instruct a processing operation to the information processing device 100 by operating the input device 906.

The output device 907 is a device capable of visually or aurally presenting information acquired or generated by the information processing device 100 to the user. The output device 907 may be, for example, a display device such as a liquid crystal display (LCD), a plasma display panel (PDP), an organic light emitting diode (OLED) display, a hologram, or a projector, a sound output device such as a speaker or a headphone, or a printing device such as a printer device. The output device 907 can output information obtained by the processing of the information processing device 100 as a video such as a text or an image, or a sound such as voice or audio.

The storage device 908 is a data storage device configured as an example of a storage unit of the information processing device 100. The storage device 908 may include, for example, a magnetic storage device such as a hard disk drive (HDD), a semiconductor storage device, an optical storage device, a magneto-optical storage device, or the like. The storage device 908 can store programs executed by the CPU 901, various types of data, various types of data acquired from the outside, or the like.

The drive 909 is a reading or writing device of a removable recording medium such as a magnetic disk, an optical disk, a magneto-optical disk, or a semiconductor memory, and is built in or externally attached to the information processing device 100. For example, the drive 909 can read information recorded in the attached removable recording medium and output the information to the RAM 903. Furthermore, the drive 909 can write a record in the attached removable recording medium.

The connection port 910 is a port for directly connecting the external connection device to the information processing device 100. The connection port 910 may be, for example, a universal serial bus (USB) port, an IEEE 1394 port, a small computer system interface (SCSI) port, or the like. Furthermore, the connection port 910 may be an RS-232C port, an optical audio terminal, or a high-definition multimedia interface (HDMI (registered trademark)) port, or the like. The connection port 910 is connected with the external connection device, such that various types of data can be transmitted and received between the information processing device 100 and the external connection device.

The communication device 911 is, for example, a communication interface including a communication device for connecting to a network 920, or the like. The communication device 911 may be, for example, a communication card for wired or wireless local area network (LAN), Wi-Fi (registered trademark), Bluetooth (registered trademark), or wireless USB (WUSB). Furthermore, the communication device 911 may be a router for optical communication, a router for asymmetric digital subscriber line (ADSL), a modem for various types of communication, or the like.

For example, the communication device 911 can transmit and receive signals and the like to and from the Internet or another communication device by using a predetermined protocol such as TCP/IP. Furthermore, the network 920 connected to the communication device 911 is a network connected by wire or wirelessly, and may be, for example, an Internet communication network, a home LAN, an infrared communication network, a radio wave communication network, a satellite communication network, or the like.

Note that it is also possible to create a program for causing hardware such as a CPU 901, a ROM 902, and a RAM 903 built in a computer to exhibit functions equivalent to those of the above-described information processing device 100. Furthermore, a computer-readable recording medium in which the program is recorded can also be provided.

While the preferred embodiments of the present disclosure have been described in detail with reference to the accompanying drawings, the technical scope of the present disclosure is not limited to such examples. It is obvious that those with ordinary skill in the technical field of the present disclosure can conceive various types of alterations or corrections within the scope of the technical idea recited in the claims, and it is naturally understood that those alterations or corrections also fall within the technical scope of the present disclosure.

Furthermore, the effects described in the present specification are merely exemplary or illustrative, and are not restrictive. In other words, the technology according to the present disclosure may exhibit other effects apparent to those skilled in the art from the description of the present specification, in addition to the effects described above or instead of the effects described above.

Note that the following configurations also fall within the technical scope of the present disclosure.
(1) A program for causing a computer to function as:
   an issuance information generation unit that generates information for issuing a divisible token that includes information regarding a benefit ratio of a consideration and operates on a blockchain; and
   a division information generation unit that generates information for issuing the token divided on the basis of distribution information of the consideration based on an agreement to a beneficiary of the consideration.
(2) The program according to (1), in which the issuance information generation unit generates information for issuing the token to a beneficiary who has registered a generation source of the consideration.
(3) The program according to (1) or (2), in which the information generated by the division information generation unit includes information that can prove legitimacy of a process executed by the division information generation unit.
(4) The program according to (3), in which the process executed by the division information generation unit is verified by zero knowledge proof.
(5) The program according to any one of (1) to (4), in which the information regarding the benefit ratio of the consideration is information encrypted such that only the beneficiary can decrypt the benefit ratio of the consideration.
(6) The program according to (5), for causing the computer to further function as:
   a disclosure information generation unit that generates information for further adding, to the token, information encrypted such that a selected viewer other than the beneficiary can decrypt the benefit ratio of the consideration.
(7) The program according to (6), in which a process executed by the disclosure information generation unit is verified by zero knowledge proof.
(8) The program according to any one of (1) to (7), for causing the computer to further function as:
   a consideration information generation unit that generates information for issuing, on the blockchain, information regarding the consideration distributed to each of the beneficiaries on the basis of the information regarding the benefit ratio of the consideration acquired from the token.
(9) The program according to (8), in which the information regarding the consideration is encrypted such that each of the beneficiaries can decrypt only information regarding their own consideration.
(10) The program according to (8) or (9), in which a process executed by the consideration information generation unit is verified by zero knowledge proof.
(11) The program according to any one of (1) to (4), in which the information regarding the benefit ratio of the consideration is a hash value generated by using the benefit ratio of the consideration and a random number uniquely set for each beneficiary of the consideration.
(12) The program according to (11), in which the benefit ratio of the consideration and the random number are stored in a storage device provided outside the blockchain, and
   the hash value is used to verify legitimacy of the benefit ratio of the consideration stored in the storage device.
(13) The program according to (11), for causing the computer to further function as:
   a consideration information generation unit that generates information for issuing, on the blockchain, information regarding the consideration distributed to each of the beneficiaries on the basis of the benefit ratio of the consideration stored in the storage device.
(14) The program according to any one of (1) to (13), in which the token is a semi-fungible token.
(15) An information processing method executed by a computer, the method including:
   generating information for issuing a divisible token that includes information regarding a benefit ratio of a consideration and operates on a blockchain; and
   generating information for issuing the token divided on the basis of distribution information of the consideration based on an agreement to a beneficiary of the consideration.
(16) An information processing device including:
   an issuance information generation unit that generates information for issuing a divisible token that includes information regarding a benefit ratio of a consideration and operates on a blockchain; and
   a division information generation unit that generates information for issuing the token divided on the basis of distribution information of the consideration based on an agreement to a beneficiary of the consideration.

### REFERENCE SIGNS LIST

- 10: Information processing system
- 100: Information processing device
- 200: Blockchain
- 301, 302, 303, 304: Information processing terminal
- 310, 320, 330, 340: Wallet
- 110: Registration unit
- 120: Issuance information generation unit
- 130: Division information generation unit
- 140: Disclosure information generation unit
- 150: Consideration information generation unit
- 210: Token issuing unit
- 220: Verification unit
- 230: Consideration information issuing unit
- Cr: Creator
- Pb: Publisher
- Mo: Management organization
- Io: Issuing organization
- tn: Token

## Claims

1. A program for causing a computer to function as:
an issuance information generation unit that generates information for issuing a divisible token that includes information regarding a benefit ratio of a consideration and operates on a blockchain; and
a division information generation unit that generates information for issuing the token divided on a basis of distribution information of the consideration based on an agreement to a beneficiary of the consideration.

2. The program according to claim 1, wherein the issuance information generation unit generates information for issuing the token to a beneficiary who has registered a generation source of the consideration.

3. The program according to claim 1, wherein the information generated by the division information generation unit includes information that can prove legitimacy of a process executed by the division information generation unit.

4. The program according to claim 3, wherein the process executed by the division information generation unit is verified by zero knowledge proof.

5. The program according to claim 1, wherein the information regarding the benefit ratio of the consideration is information encrypted such that only the beneficiary can decrypt the benefit ratio of the consideration.

6. The program according to claim 5, for causing the computer to further function as:
a disclosure information generation unit that generates information for further adding, to the token, information encrypted such that a selected viewer other than the beneficiary can decrypt the benefit ratio of the consideration.

7. The program according to claim 6, wherein a process executed by the disclosure information generation unit is verified by zero knowledge proof.

8. The program according to claim 1, for causing the computer to further function as:
a consideration information generation unit that generates information for issuing, on the blockchain, information regarding the consideration distributed to each of the beneficiaries on a basis of the information regarding the benefit ratio of the consideration acquired from the token.

9. The program according to claim 8, wherein the information regarding the consideration is encrypted such that each of the beneficiaries can decrypt only information regarding their own consideration.

10. The program according to claim 8, wherein a process executed by the consideration information generation unit is verified by zero knowledge proof.

11. The program according to claim 1, wherein the information regarding the benefit ratio of the consideration is a hash value generated by using the benefit ratio of the consideration and a random number uniquely set for each beneficiary of the consideration.

12. The program according to claim 11, wherein the benefit ratio of the consideration and the random number are stored in a storage device provided outside the blockchain, and
the hash value is used to verify legitimacy of the benefit ratio of the consideration stored in the storage device.

13. The program according to claim 12, for causing the computer to further function as:
a consideration information generation unit that generates information for issuing, on the blockchain, information regarding the consideration distributed to each of the beneficiaries on a basis of the benefit ratio of the consideration stored in the storage device.

14. The program according to claim 1, wherein the token is a semi-fungible token.

15. An information processing method executed by a computer, the method comprising:
generating information for issuing a divisible token that includes information regarding a benefit ratio of a consideration and operates on a blockchain; and
generating information for issuing the token divided on a basis of distribution information of the consideration based on an agreement to a beneficiary of the consideration.

16. An information processing device comprising:
an issuance information generation unit that generates information for issuing a divisible token that includes information regarding a benefit ratio of a consideration and operates on a blockchain; and
a division information generation unit that generates information for issuing the token divided on a basis of distribution information of the consideration based on an agreement to a beneficiary of the consideration.
